# EUROPEAN PATENT APPLICATION

(11) **EP 2 019 515 A1**
(43) Date of publication of application: **28.01.2009**
(21) Application number: 07113149.4
(22) Date of filing: 25.07.2007
(51) Int. Cl.: H04L 12/28

(54) **Method and apparatus for mobile network selection by a wireless device connected to a generic access network**

(71) Applicant: Research In Motion Limited, Waterloo, Ontario N2L 3W8 (CA)
(72) Inventor: Venkob, Satish, Waterloo Ontario N2J 3B8 (CA); Naqvi, Noushad, Waterloo Ontario N2K 4C1 (CA); Wijayanathan, Maiyuran, Waterloo Ontario N2V 2X9 (CA)
(74) Representative: Fennell, Gareth Charles

(57) **Abstract**

Apparatus, and an associated method, for facilitating manual PLMN selection of a GAN-connected wireless device. While maintaining connection of the wireless device with a serving GANC, a request is made for a PLMN listing of the potentially available PLMNs with which the wireless device can communicate. The request message is sent to the network, and the PLMN listing is created by a PLMN listing creator. The listing is provided to the wireless device in a response message returned to the device. Selection of a selected PLMN is made, subsequent to the selection, the de-registration of the connection of the wireless device with the serving GANC is permitted.

## Description

The present invention generally to a manner by which to provide a GAN (Generic Access Network) - connected, wireless device with a mobile network list to permit a user of the wireless device to make manual selection of a network from the list. More particularly, the present invention, provides apparatus, and an associated method, by which to provide the wireless device with a mobile network list, e.g., a PLMN list, while preventing service loss during the PLMN selection procedure.

A GAN connection with at least one GAN controller (GANC) is maintained throughout the selection procedure, at least until a PLMN has been selected. By maintaining a GANC connection, service loss, such as inability to terminate, or originate, a call at the wireless device is less likely to occur.

### Background of the Invention

The development and deployment of many types of radio communication systems have been permitted as a result of advancements in radio communication technology. New types of radio communication services, at lowered costs to users, and at greater communication throughputs are all possible in the radio communication systems that take advantage of such advancements. Regular use of radio communication systems through which to communicate and complete many varied communication services is made by many. And, use of radio communication systems through which to communicate is an increasingly pervasive aspect of every day life.

Cellular communication systems, WLAN (Wireless Local Area Network) systems, and WiFi (Wireless Fidelity) systems are all exemplary of radio communication systems that have been widely deployed and are regularly used. Each of these systems provide for radio communications with wireless devices, formed of radio transceivers. The wireless devices are variously referred to as, e.g., mobile stations, mobile nodes, access terminals, user equipment, etc. In many implementations, a wireless device is configured to be portable, permitting its easy carriage by a user. The wireless device is carried by the user, and, when needed for communication purposes, the wireless device is immediately available for use by the user. And, generally, during its use, the user need not be stationary but, rather, move while continuing communications by way of the wireless device.

To operate properly with a communication network, the wireless device must be constructed to transmit signals that are recognized by the communication network and to receive signals that are detectable by the wireless device. Operating standards are promulgated that define operational parameters of communication-system devices. As successive generations of operating standards proliferate, a wireless device is sometimes constructed to be operable in conformity with multiple communication standards associated with a single radio communication system-type. And, with convergence of communication technologies, similar, or identical, communication services are increasingly able to be performed by way of different communication system-types. Correspondingly, wireless devices are sometimes constructed to be capable of communicating by way of more than one communication system-type. For instance, a multi-mode, wireless device is constructed to be capable of communicating both by way of a macro cellular communication network and by way of a WiFi network. Other multi-mode devices analogously provide a user with the ability to communicate by way of other combinations of communication systems.

While various operating procedures and protocols have already been promulgated, others are undergoing promulgation with respect to various aspects of interoperability between the different communication systems. One aspect of interoperability of communications pertains to manual macro cellular network selection by a user of the wireless device that is also GAN (Generic Access Network) - connected or connectable. In typical operation, a wireless device registers with a default GANC (Generic Access Network Controller). Once registered, the default GANC might instruct the wireless device to become registered with an SGANC (Serving Generic Access Network Controller) in the same PLMN (Public Land Mobile Network) as that of the default GANC or of another PLMN. In an existing scheme, when a user of a GGAN-connected wireless device elects to perform manual macro cellular, i.e., PLMN (Public Land Mobile Network), network selection, the wireless device is caused to be deregistered from the serving GANC, and a macro cellular network listing is sent to the wireless device. And, the user of the wireless device makes selection from the listing. Because the existing scheme necessitates deregistration of the wireless device from its serving GANC prior to connection to a PLMN by way of another GANC, there is a possibility that a call or communication service to be terminated at the wireless device, while the wireless device is deregistered and not registered with any other network, shall not successfully be completed.

This existing procedure is disadvantageous for the reason that the wireless device might be deregistered when communications are to be terminated at the device. An improved manner by which to provide for manual PLMN, or other network, selection by a user of the wireless device is needed.

It is in light of this background information related to radio communications that the significant improvements of the present invention have evolved.

### Brief Description of the Drawings

Figure 1 illustrates a functional block diagram of a radio communication system in which an embodiment of the present invention is operable.

Figure 2 illustrates a message sequence diagram representative of signals generated during operation of an embodiment of the present invention.

Figure 3 illustrates an exemplary format of another message generated during operation of an embodiment of the present invention.

Figure 4 illustrates a message sequence diagram representative of signals generated during operation of an embodiment of the present invention.

Figure 5 represents a sequence diagram representative of operation of another embodiment of the present invention.

Figure 6 illustrates a method flow diagram representative of the method of operation of an embodiment of the present invention.

### Detailed Description

The present invention, accordingly, advantageously provides apparatus, and an associated method, by which to provide a GAN-connected device with a mobile network list to permit a user of the wireless device to make manual selection of an entry thereon.

Through operation of an embodiment of the present invention, a manner is provided by which to deliver to the wireless device a mobile network list while preventing service loss during the mobile network selection procedure.

In one aspect of the present invention, a GAN connection with at least one GANC is maintained throughout the selection procedure, at least until a mobile network has been selected. By maintaining a GANC connection, service loss, such as inability to terminate, or to originate, a call at the wireless device is less likely to occur.

In another aspect of the present invention, a user of the wireless device, while registered with a serving GANC elects to make manual selection, or reselection, of a PLMN through which to communicate. To make such a selection, the user must be aware of the potentially available macro cellular networks in the area at which the user, and wireless device, is positioned. Upon election by the user to make the manual selection, the user causes the message to be sent by the wireless device, while the wireless device remains registered to the serving GANC. The message alerts the network of the election by the user to make manual PLMN selection. Because the wireless device remains registered with the serving GANC, the wireless device remains available in the event that a call, or other communication, is made to the wireless device.

In another aspect of the present invention (re)connection is formed with a default GANC upon election by the user of the wireless device to make manual PLMN selection. The connection with the default GANC is made while also maintaining the connection with the serving GANC. The message caused by the user of the wireless device to be generated by the wireless device is sent to the default GANC. The message is, e.g., a GA-RC REGISTER REQUEST message or is a newly-defined message, such as the GA-RC GANPLMNLIST request message.

In another aspect of the present invention, the message caused to be sent by the wireless device when the user thereof elects to make manual PLMN selection is delivered to the serving GANC. The message comprises, for instance, the already-defined GA-RC REGISTER REQUEST message set forth in technical specification document 3GPP Section 44.318. Or, the message comprises a GA-RC GANPLMNLIST request, or other newly-defined message. When delivered to the serving GANC, the request is relayed by the serving GANC on to the default GANC.

In another aspect of the present invention, the default GANC, upon detection of the message generated by the wireless device, creates, or otherwise accesses, a PLMN list of potentially available macro cellular networks. The message is either delivered directly to the default GANC or relayed thereto by the serving GANC. When the message is relayed to the default GANC by the serving GANC, a new connection is not required to be made by the wireless device to the default GANC. Rather, the wireless device merely makes use of the existing connection with the serving GANC. The list comprises entries formed of the PLMN and associated GANC. And, a message is generated for communication to the wireless device that includes identification of the networks contained in the listing of the potentially-available PLMNs. The response message comprises, for instance, a GA-RC register redirect message, such as that set forth in technical specification 3GPP Section 44.318. Or, the message comprises a newly-defined message, such as a GA-RC GANPLMNLIST response message. If the request message is relayed to the default GANC by way of the serving GANC, the response message is returned to the wireless device by way of the serving GANC and relayed on to the wireless device.

In another aspect of the present invention, the wireless device further includes a detector that detects the response message sent to the wireless device. And, the wireless device includes a network identity extractor operable to extract the identities of the entries contained in the listing formed in the response message. The extracted indications are caused to be displayed upon a user display, or the like, to permit the user of the wireless device to make selection therefrom.

In another aspect of the present invention, the wireless device deregisters its connection with the serving GAN subsequent to user selection of a macro cellular network and associated GANC contained on the list. Upon such selection of the PLMN, communication connectivity, by way of the associated GANC is made. If a connection with the associated GANC has not yet been made, such a connection is made, along with the deregistration of the wireless device with the serving GANC.

Thereby, because the wireless device remains registered with the serving GANC at least until the user makes selection of a macro cellular network through which to communicate, unavailability of the wireless device to receive a terminating call or communication is less likely to occur.

In these and other aspects, therefore, apparatus, and an associated method is provided for facilitating mobile network selection of a GAN-connected wireless device. While maintaining connection of a wireless device with a serving GANC, a first message having a request for a listing of mobile networks potentially available for communication connectivity is sent to the default GANC. And, also while maintaining the connection of the wireless device with the serving GANC, a response message sent to the wireless device responsive to the first message is detected. The response message includes a listing of the mobile networks.

If the default GANC is same as the serving GANC then the device need not trigger a new connection establishment since it is already connected and the device needs to send the message (REGISTER/PLMNREQ) over the existing connection without deregistering with the GANC.

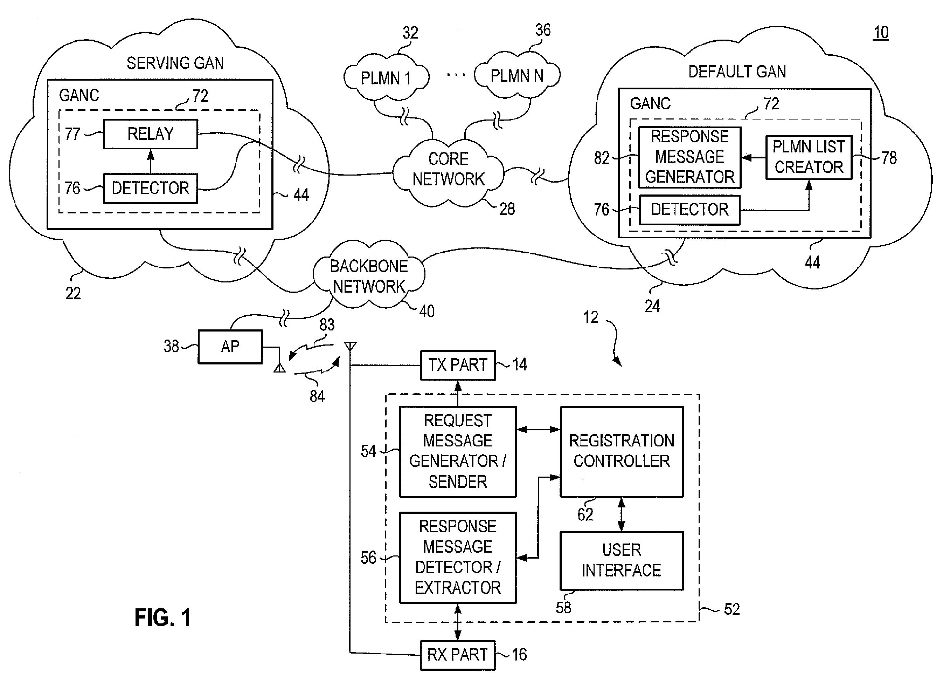

Referring first, therefore, to Figure 1, a radio communication system, shown generally at 10, provides for radio communications with wireless devices, of which the User Equipment (UE) 12 is representative. The user equipment is capable of originating, and terminating, communications during operation of the communication system. In the exemplary implementation, the user equipment forms a multi-mode device, capable of operation to communicate in both a macro cellular network and in a GAN network, such as a WiFi network, or the like. The user equipment, for instance, operates in conformity with the operating protocols set forth by the 3GPP (3^{rd} Generation Partnership Project) together with its interoperability protocols with GAN systems. In other implementations, the radio communication system is operable in conformity with other operating specifications, and the user equipment formed of the wireless device 12 is correspondingly configured to operate in such other implementations.

The user equipment includes radio transceiver circuitry, here represented by a transmit part 14 and a receive part 16. The transmit part operates to modulate, up-convert, and transmit send signals formed at the user equipment, and the receive part operates to receive, down-convert, demodulate, and perform other operations with respect to information communicated to the user equipment.

The communication system includes network infrastructure, here shown to include a plurality of GANCs (Generic Access Network Controllers) and a plurality of PLMNs (Public Land Mobile Networks). In the illustrated embodiment, a serving GANC 22 and a default GANC 24 are connected to a core network 28. And, a first PLMN 32 and an n^{th} PLMN 36 are also coupled to the core network 28. In a roaming situation the serving GANC and default GANC might belong to different PLMNs and hence might be connected to different core networks.

The GANCs 22 and 24 are shown coupled to access points (APs), of which the access point 38 is representative, by way of a backbone network 40 and, e.g., internet (not explicitly shown)

As noted previously, a user of a wireless device might elect to make manual selection of a PLMN, such as one of the networks 32 and 36, through which to communicate. An existing scheme used in which the user of the wireless device makes manual PLMN selection necessitates deregistration of a GANC-connected wireless device prior to user selection of a potentially available PLMN. If communications are to be terminated at the wireless device subsequent to its deregistration from a GANC, the communication is unable to be completed. And, if the user subsequently elects not to make a PLMN selection, the wireless device remains unregistered, and the period in which communications cannot be made with the wireless device is extended.

An embodiment of the present invention provides a manner by which to facilitate manual PLMN selection by a user of the user equipment without deregistration of the user equipment from a GANC prior to the manual selection. By maintaining the connectivity with a GANC, communications with the user equipment are not interrupted due to the deregistration of the user equipment.

Accordingly, the user equipment includes apparatus, shown generally at 52, of an embodiment of the present invention. The entities of the apparatus 52 are functionally represented, implementable in any desired manner, including by algorithms executable by processing circuitry. And, while illustrated separate from the transmit and receive part of the wireless device, portions, or entireties, of the functions carried out by the various entities are implementable, as part of the transceiver circuitry. The apparatus 52 is here shown to include a request message generator and sender 54, a response message detector 56, a user interface 58, and a registration controller 62.

The network portion of the communication system also includes apparatus, shown generally at 72, of an embodiment of the present invention. The apparatus 72 is also functionally represented, and the entities thereof are implementable in any desired manner, including by algorithms executable by processing circuitry. The apparatus 72, in the exemplary implementation, is embodied at a GAN controller (GANC). In other implementations, the apparatus is implemented elsewhere, or distributed amongst various network, or other, entities. In the illustrated embodiment, the apparatus 72 embodied at the serving GANC comprises a detector 76 and a relay 77. And, the apparatus 72 embodied at the default GANC includes a request message detector 76, a PLMN list creator 78, and a response message generator 82.

In operation, the user equipment, subsequent to initial registration with the default GANC, is in a connection, viz., registered with, the GANC 44 of 22. Transfer of connectivity to the serving GANC is made, e.g., to equalize system loading. When the user of the wireless device elects to make manual PLMN selection, an appropriate actuation is made by way of the user interface 58. In response to the user election, the registration controller 62 causes the request message generator and sender 54 to generate a request message that is provided to the transmit part 14 and, in turn, communicated therefrom by way of a radio air interface, indicated by the line 83. And, the response message detector 56 operates to detect a response message, indicated by the line 84, returned to the user equipment and operated upon by the receive part of the transceiver circuitry. The response message includes a PLMN listing that identifies potentially-available PLMNs and their associated GANs. The listing identities are extracted from the response message and displayed at a user display of the user interface. The user of the wireless device makes selection, if desired, of a PLMN, and its associated GAN, contained in the displayed list. And, when selection is made, appropriate actuation of the user interface, such as actuation keys of an actuation keypad, is made, and the selection is provided to the transmit part for communication to the network portion of the communication system. Indication of the selection is, e.g., made to a registration controller 62 that causes the selection to be made to the transmit part, such as by way of the sender 54. And, the registration controller operates to control registration, and deregistration, of the user equipment, such as registration and deregistration signals caused to be transmitted by the transmit part 14 also, e.g., by way of the sender 54.

In one embodiment, upon election by the user to make manual PLMN selection, the registration controller commences registration, and formation of a secured connection with the default GANC. Upon formation of the connection, the request message generated by the generator and sender 54 is sent to the default GANC. The message is detected by the detector of the apparatus 72 embodied at the GANC, the PLMN list creator creates the potentially-available PLMN list, and the response message generator generates a message including the PLMN listing with the PLMN and associated GAN entries. The response message is communicated to the user equipment, detected by the response message detector, and the PLMN listing information is extracted therefrom. When displayed at the user interface, the user makes selection of the selected PLMN and its associated GANC, and indications of the selection are provided to the transmit portion and to the registration controller. Upon selection of the PLMN, the registration controller initiates deregistration of the user equipment from the serving GANC. Subsequent communications are by way of the associated GANC, associated with the selected PLMN. The request message generated by the generator and sender 54, in one implementation, comprises an already-defined GA-RC REGISTER REQUEST message, such as that defined in technical specification 3GPP, section 44.318. And, in one implementation, the response message generated by the response generator 82 comprises an already-defined GA-RC REGISTER REDIRECT message, defined, e.g., in technical specification 3GPP, section 44.318. In another implementation, newly-defined messages, a GA-RC GANPLMNLIST REQUEST and a GA-RC GANPLMNLIST RESPONSE message are instead utilized.

In another embodiment, upon election by the user of the wireless device to make manual PLMN selection, the request message generated by the generator and sender 54 is, instead, sent to the apparatus 72 of the serving GANC. Here, the detector 76 makes detection, and the relay 77 relays on the request message to the default GANC. Corresponding detection, PLMN list creation, and response message generation is performed at the default GANC. And, a response message is returned to the user equipment, operated upon by the user equipment, operated by the receive part, and detected by the detector 56. Extraction of the information contained in the response message is made, and display of the potentially-available PLMNs, and associated GANCs, is made at the user interface. Upon selection of the selected PLMN, indications are provided to the registration controller and to the transmit part, such as by way of the sender 54. The registration controller causes deregistration with the serving GANC and registration with the GANC of the selected PLMN and formation of secured connection with the GANC of the selected PLMN. The request and response messages that are generated include those mentioned above.

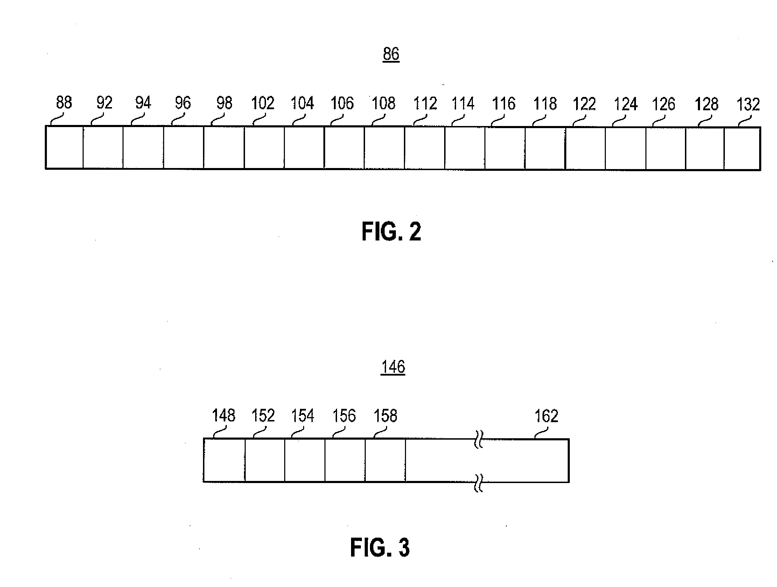

Figure 2 illustrates an exemplary format of a GA-RC GANPLMNLIST request message, here shown at 86. The message is configured in the exemplary implementation according to the configuration of the following table:

**GA-RC GANPLMNLIST REQUEST**

| **Information Element** | **Type/Reference** | **Presence** | **Format** | **Length** |
|---|---|---|---|---|
| Length Indicator | Length Indicator | M | V | 2 |
| GA-RC Protocol Discriminator | Protocol Discriminator | M | V | ½ |
| Skip Indicator | Skip Indicator | M | V | ½ |
| GA-RC GANPLMNLIST REQUEST message identity | Message Type | M | V | 1 |
| IMSI | Mobile Identity | M | TLV | 10 |
| GAN Release Indicator | GAN Release Indicator | M | TLV | 3 |
| GAN Classmark | GAN Classmark | M | TLV | 4 |
| AP Radio Identity | Radio Identity | C | TLV | 9-n |
| MS Radio identity | Radio Identity | M | TLV | 9-n |
| GSM RR/UTRAN RRC State | GSM RR/ UTRAN RRC State | M | TLV | 3 |
| Coverage Indication | GERAN/UTRAN coverage Indicator | M | TLV | 3 |
| GERAN Cell Identity | GERAN Cell Identity | C | TLV | 4 |
| Location Area Identification | Location Area Identification | C | TLV | 7 |
| Routing Area Code | Routing Area Code | C | TLV | 3 |
| Geographic Location | Geographical Location | O | TLV | 9-n |
| AP location | AP Location | O | TLV | 7-n |
| AP Service Name | AP Service Name | C | TLV | 4-67 |
| Required GAN Services | Required GAN Services | O | TLV | 3 |

The message includes a length indicator field 88, a GA-RC protocol discriminator field 92, a skip indicator field 94, a message identity field 96, an IMSI field 98, a GAN Release indicator field 102, a GAN classmark field 104, an AP radio field 106, an MS radio identity field 108, an RRC state field 112, a coverage indication field 114, a GERAN cell identity field 116, a location area identification field 118, a routing area code field 122, a location field 124, an AP location field 126, an AP service name field 128, and a required GAN services field 132. In the table, the presence column indicates the corresponding field to be mandatory (M), conditional (C), or optional (O). And the format column indicates the corresponding field to be value (V) or tag length value (TLV).

Figure 3 illustrates the format of an exemplary GA-RC registration accept message, shown generally at 146. The message is configured in the exemplary implementation according to the configuration of the following table:

**GA-RC GANPLMNLIST RESPONSE**

| **Information Element** | **Type/Reference** | **Presence** | **Format** | **Length** |
|---|---|---|---|---|
| Length Indicator | Length Indicator | M | V | 2 |
| GA-RC Protocol Discriminator | Protocol Discriminator | M | V | ½ |
| Skip Indicator | Skip Indicator | M | V | ½ |
| GA-RC GANPLMNLIST RESPONSE Message Type | Message Type | M | V | 1 |
| Serving GANC table indicator | Serving GANC table indicator | O | TLV | 3 |
| GAN PLMN List | GAN PLMN List | C | TLV | n |

The message includes a length indicator field 148, a protocol discriminator field 152, a skip indicator field 154, a message type field 156, a serving GANC field table indicator field 158, and the GAN PLMN list field 162. The presence and format columns in the table are as described previously.

The message includes an information element type/reference presence format length field 148, a GA-RC protocol discriminator-field 152, a skip indicator field 154, a message-type field 156, a serving GANC table indicator field 158, and a PLMN listing field 162.

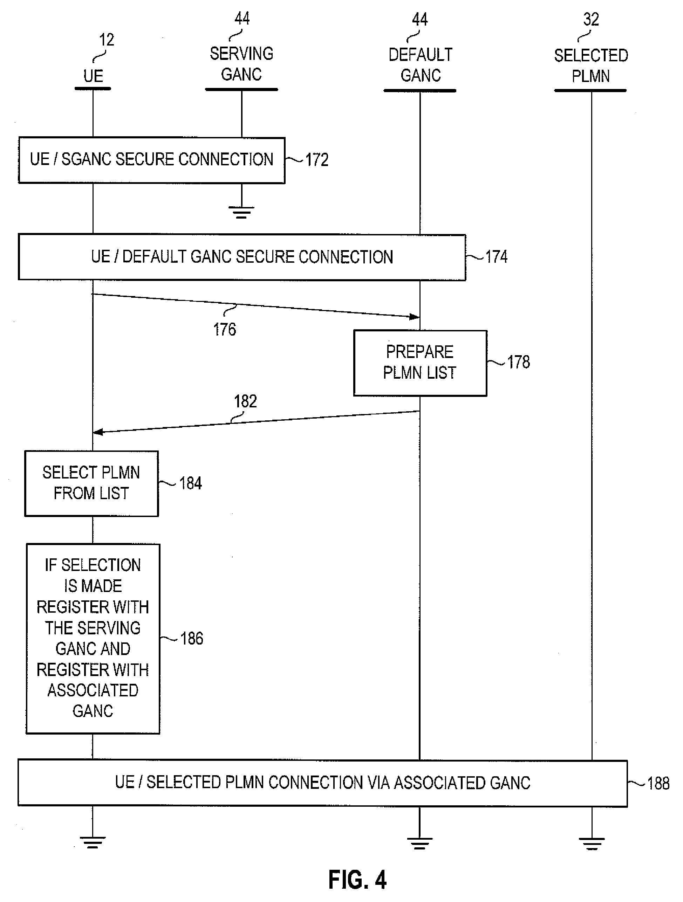

Figure 4 illustrates signaling generated during exemplary operation of an embodiment of the present invention. Here, connection between the user equipment 12 and the serving GANC is represented by the block 172. Formation of a connection between the user equipment 12 and the default GANC is shown by the block 174. The connection 174 comprises an IPsec (VPN-virtual private network) connection towards a security gateway of the default GANC while the user equipment maintains its connection 172 with the serving GANC.

The segment 176 is representative of the sending of a request by the UE for the PLMN listing. The block 178 is representative of the preparation of the PLMN listing at the default GANC. And, the segment 182 is representative of the response message that includes the PLMN listing as a portion thereof.

Once received at the user equipment, the user makes selection, indicated by the block 184, from the PLMN listing. If selection is made, and as indicated by the block 186, the link 172 with the serving GANC is torn down by deregistration therewith. And, communications commence, indicated by the block 188, between the user equipment and the selected PLMN by way of the GANC associated with the selected PLMN, here, for purposes of example, the default GANC.

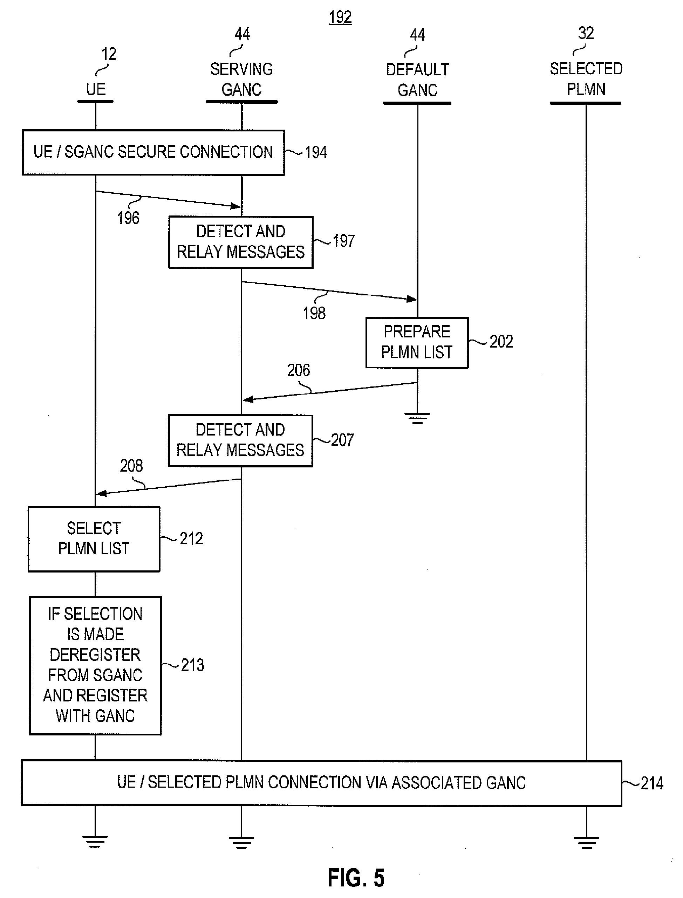

Figure 5 illustrates a message sequence diagram, shown generally at 192, of operation of another embodiment of the present invention. Here, again, a secure connection, indicated by the block 194, is maintained between the user equipment and the serving GANC. When election is made by the user of the user equipment to make manual PLMN selection, a request, indicated by the segment 196, is sent by the user equipment to the serving GANC, and the message is detected and relayed, indicated by the block 197 for forwarding, indicated by the segment 198, on to the default GANC. The PLMN listing is prepared, as indicated by the block 202, and a response message is generated and routed, here indicated by the segment 206 to the serving GANC, detected and relayed thereat, indicated by the block 207, and sent back, indicated by the segment 208, to the user equipment.

As indicated by the block 212, the user of the user equipment makes selection from the PLMN listing. Then, as indicated by the block 213, if selection is made, then the wireless device deregisters from the serving GANC and registers with the GANC associated with the selected PLMN, i.e., the associated GANC. And, a connection is formed, indicated by the block 214, with the selected PLMN, by way of the associated GANC. In this embodiment, the wireless device need not make a new connection with a default GANC in order to make its request. Rather, the wireless device makes use of its existing connection with the serving GANC. Additionally, in the event that the serving and default GANCs belong to different PLMNs, messaging is performed there between by way of the backbone network between which the GANCs are connectable. The messaging is performed in a secure manner.

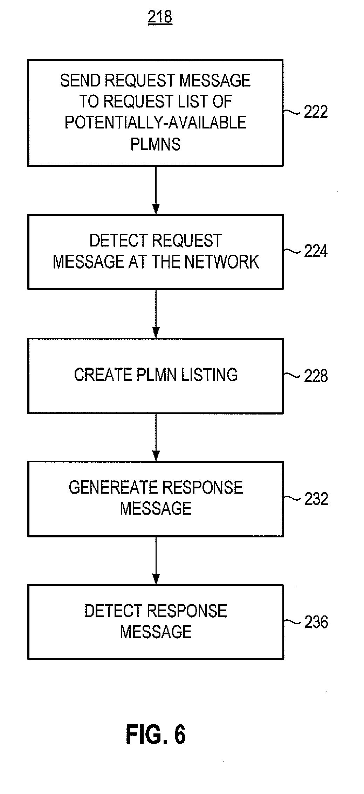

Figure 6 illustrates a method, shown generally at 218, representative of the method of operation of an embodiment of the present invention. The method facilitates mobile network selection of a GAN-connected wireless device.

First, and as indicated by the block 222, a first message is sent that includes a request for a listing of mobile networks potentially available for communication connectivity. The first message is sent while maintaining connection of the wireless device with a serving GANC. Then, and as indicated by the block 224, the first message is detected at the network. A PLMN listing is created, indicated by the block 228, and a response is generated, indicated by the block 232 that includes the PLMN listing. The response is returned to the wireless device, and, as indicated by the block 236, also while maintaining the connection of the wireless device with the serving GANC, a response message sent to the wireless device responsive to the first message is detected. The response message includes the listing of the mobile networks.

Because a connection is maintained with the serving GANC, at least until selection is made by the user of the selected PLMN from the list, communication interruption that might result due deregistration of the wireless device with the serving GAN is avoided.

Presently preferred embodiments of the present invention and many of its improvements and advantages have been described with a degree of particularity. The description is of preferred examples of implementing the invention, and the description of preferred examples is not necessarily intended to limit the scope of the invention. The scope of the invention is defined by the following claims.

## Claims

1. A method for facilitating mobile network selection of a GAN (Generic Access Network) -connected wireless device, said method comprising the operations of:
while maintaining connection of the wireless device with a serving first GANC, sending a first message having a request for a listing of mobile networks potentially available for communication connectivity; and
also while maintaining connection of the wireless device with the serving first GANC, detecting a response message sent to the wireless device responsive to the first message, the response message including the listing of the mobile networks.

2. The method of claim 1 further comprising the operation of selecting a selected mobile network from the listing.

3. The method of claim 1 further comprising the operation of creating connection of the wireless device with a GANC of the selected mobile network.

4. The method of claim 3 wherein the connection created with the second GAN pursuant to said operation of creating the connection with the second GAN comprises a secured connection at an IPsec, Internet Protocol security, layer.

5. The method of claim 4 wherein the first message sent during said operation of sending comprises a second-GAN-terminated message.

6. The method of claim 5 wherein said operation of creating the connection with the second GAN is performed prior to said operation of sending the second-GAN-terminated message.

7. The method of claim 1 comprising the further operation of closing the connection with the first GAN subsequent to detection, during said operation of detecting, of the response message.

8. The method of claim 7 further comprising the operation of forming a connection with the selected mobile network and wherein said operation of closing the connection with the first GANC is made prior to formation of the connection with the selected mobile network.

9. The method of claim 1 wherein the response message detected during said operation of detecting comprises a second-GAN-generated response message.

10. The method of claim 1 wherein the response message detected during said operation of detecting comprises a first-GAN-generated response message.

11. The method claim1 wherein the first message sent during said operation of sending comprises a GA-RC REGISTER REQUEST message.

12. The method of claim 1 wherein the response message detected during said operation of detecting comprises a GA-RC REGISTER REDIRECT message.

13. The method of claim 1 wherein the first message sent during said operation of sending comprises a GA-RC GANPLMNLIST REQUEST message.

14. The method of claim 1 wherein the response message detected during said operation of detecting comprises a GA-RC GANPLMNLIST Response message.

15. Apparatus for facilitating mobile network selection of a GAN (Generic Access Network) -connected wireless device, said apparatus comprising:
a first message sender configured to send a first message having a request for a listing of mobile networks potentially available for communication connectivity, the first message sent while maintaining a first GAN connection; and
a response message detector configured to detect a response message set to the wireless device responsive to the first message sent by said first message sender, the response message including the listing of the mobile networks, the response message detected while maintaining the first GAN connection.

16. The apparatus of claim 15 wherein the first message sent by said message sender comprises a second-GAN-terminated message.

17. The apparatus of claim 15 further comprising a selector configured to select a selected mobile network from the listing contained in the response message detected by said response message detector.

18. The apparatus of claim 15 further comprising a GAN-connection controller configured to control CAN connectivity of the wireless device.

19. Apparatus for facilitating mobile network selection for GAN-connected communications, said apparatus comprising:
a first message detector configured to detect a first message forming a GA-RC GANPLMNLIST request for a listing of mobile networks potentially available for communication connectivity the first message detected while maintaining a first GAN connection; and
a response message generator configured to generate a GA-RC GANPLMNLIST response message responsive to the first message detected by said first message detector, the response message including the listing of the mobile networks, the response message generated while maintaining the first GAN connection.

20. The apparatus of claim 19 further comprising a listing creator configured to create the listing of the mobile networks, the listing included in the GA-RC GANPLMNLIST response message created by said response message generator.

## Amended claims

### Amended claims in accordance with Rule 137(2) EPC.

**1.** A method for facilitating mobile network selection of a GAN (Generic Access Network) -connected wireless device (12), said method comprising the operations of:
while maintaining connection of the wireless device with a serving first Generic Access Network controller GANC (22), sending (176) a first message that requests a listing of mobile networks potentially available for communication connectivity; and
also while maintaining connection of the wireless device with the serving first GANC, detecting (182) a response message sent to the wireless device (12) responsive to the first message, the response message including the listing of the mobile networks;
after a response message is received, displaying on a user interface (58), a listing of mobile networks identified in said response message, and permitting manual selection at the wireless device (12) through said user interface (58), of a mobile network through which the wireless device can communicate; and
de-registering the wireless device (12) from the serving first Generic Access Network controller GANC (22) and, registering the wireless device (12) with a manually-selected mobile network (186), after permitting manual selection of a mobile network.

**2.** The method of claim 1 further comprising the operation of creating connection (174) of the wireless device with a GANC of the selected mobile network.

**3.** The method of claim 1 wherein the connection created with the second GAN pursuant to said operation of creating the connection (174) with the second GAN comprises a secured connection at an IPsec, Internet Protocol security, layer.

**4.** The method of claim 3 wherein the first message sent during said operation of sending (176) comprises a second-GAN-terminated message.

**5.** The method of claim 4 wherein said operation of creating the connection (174) with the second GAN is performed prior to said operation of sending (176) the second-GAN-terminated message.

**6.** The method of claim 1 comprising the further operation of closing the connection with the first GAN subsequent to detection, during said operation of detecting (182), of the response message.

**7.** The method of claim 6 further comprising the operation of forming a connection (188) with the selected mobile network and wherein said operation of closing the connection with the first GANC is made prior to formation of the connection with the selected mobile network.

**8.** The method of claim 1 wherein the response message detected during said operation of detecting (182) comprises a second-GAN-generated response message.

**9.** The method of claim 1 wherein the response message detected during said operation of detecting (182) comprises a first-GAN-generated response message.

**10.** The method claim 1 wherein the first message sent during said operation of sending (176) comprises a GA-RC REGISTER REQUEST message.

**11.** The method of claim 1 wherein the response message detected during said operation of detecting (182) comprises a GA-RC REGISTER REDIRECT message.

**12.** The method of claim 1 wherein the first message sent during said operation of sending (176) comprises a GA-RC GANPLMNLIST REQUEST message.

**13.** The method of claim 1 wherein the response message detected during said operation of detecting (182) comprises a GA-RC GANPLMNLIST Response message.

**14.** Apparatus (52) for facilitating mobile network selection of a GAN (Generic Access Network) -connected wireless device (12), said apparatus (52) comprising:
a first message sender (54) configured to send a first message having a request for a listing of mobile networks potentially available for communication connectivity, the first message sent while maintaining a first GAN connection; and
a response message detector (56) configured to detect a response message set to the wireless device (12) responsive to the first message sent by said first message sender (54), the response message including the listing of the mobile networks, the response message detected while maintaining the first GAN connection;
a user interface (58) on which indications of mobile networks in the response message are displayed to and through which manual selection of a mobile network displayed on said user interface (58) is made; and
a registration controller (62), which operates to control deregistration of the wireless device (12) from a first GAN connection and re-registration with a manually-selected network displayed on said user interface (58).

**15.** The apparatus (52) of claim 14 wherein the first message sent by said message sender (54) comprises a second-GAN-terminated message.

**16.** The apparatus (52) of claim 14 further comprising a selector (62) configured to select a selected mobile network from the listing contained in the response message detected by said response message detector.

**17.** The apparatus (52) of claim 14 further comprising a GAN-connection controller (62) configured to control CAN connectivity of the wireless device.
